(19) Europäisches Patentamt
European Patent Office
Office européen des brevets

(11) EP 4 488 437 B1

(12) **EUROPEAN PATENT SPECIFICATION**

(45) Date of publication and mention of the grant of the patent:
**16.09.2026 Bulletin 2026/38**

(21) Application number: **23763316.9**

(22) Date of filing: **21.02.2023**

(51) International Patent Classification (IPC):
***D04H 3/16*** *(2006.01)* ***B01D 39/14*** *(2006.01)*
***B01D 39/16*** *(2006.01)* ***B03C 3/28*** *(2006.01)*
***D04H 3/007*** *(2012.01)*

(52) Cooperative Patent Classification (CPC):
**D04H 3/007; B01D 39/1623; B03C 3/28; D04H 3/16;** B01D 2239/0435; B01D 2239/0622; B01D 2239/10; B01D 2239/1233; B01D 2239/1291

(86) International application number:
**PCT/JP2023/006205**

(87) International publication number:
**WO 2023/167057 (07.09.2023 Gazette 2023/36)**

(54) **METHOD AND APPARATUS FOR MANUFACTURING ELECTRET MELT BLOWN NONWOVEN FABRIC**

VERFAHREN UND VORRICHTUING ZUR HERSTELLUNG EINES ELEKTRET-SCHMELZGEBLASENEN VLIESSTOFFS

PROCÉDÉ ET DISPOSITIF DE PRODUCTION DE NON-TISSÉ ÉLECTRET OBTENU PAR FUSION-SOUFFLAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.03.2022 JP 2022032414**
**27.10.2022 JP 2022172283**

(43) Date of publication of application:
**08.01.2025 Bulletin 2025/02**

(73) Proprietor: **Toray Industries, Inc.**
**Tokyo 103-8666 (JP)**

(72) Inventors:
- **TANAKA, Yoshiki**
  **Otsu-shi, Shiga 520-8558 (JP)**
- **HAYASHI, Shingo**
  **Otsu-shi, Shiga 520-8558 (JP)**
- **YOSHITOMI, Tomohiro**
  **Anpachi-gun, Gifu 503-2395 (JP)**
- **SAKASHITA, Ryuta**
  **Otsu-shi, Shiga 520-8558 (JP)**
- **MINOURA, Kiyoshi**
  **Otsu-shi, Shiga 520-8558 (JP)**
- **UEDA, Kohei**
  **Otsu-shi, Shiga 520-8558 (JP)**

(74) Representative: **Mewburn Ellis LLP**
**Aurora Building**
**Counterslip**
**Bristol BS1 6BX (GB)**

(56) References cited:
**WO-A1-03/060216**
**JP-A- 2002 161 467**
**JP-A- 2002 161 467**
**JP-A- 2022 149 681**
**KR-A- 20160 141 384**
**KR-B1- 102 256 160**
**US-A- 3 959 421**
**US-A1- 2005 077 646**
**US-A1- 2011 168 024**
**US-A1- 2011 168 024**
**US-A1- 2013 288 555**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 488 437 B1

## Description

### TECHNICAL FIELD

The present invention relates to a method and an apparatus for manufacturing an electret melt blown nonwoven fabric that enable production of a high-quality electret processed product at low cost.

### BACKGROUND ART

Melt blown nonwoven fabrics subjected to electret processing have been frequently used in the past as a material for air filters with low pressure loss. As methods for manufacturing a melt blown nonwoven fabric subjected to electret processing, a method in which ultrafine fibers are spun in a so-called meltblowing method where a molten non-electroconductive polymer is discharged from a spinneret having a plurality of spinning holes in the width direction and hot air is injected at the same time to stretch the molten polymer, the spun yarns are collected by a yarn collection device provided below to form a melt blown nonwoven fabric, and then electretization is performed using corona discharge, and a method in which water is injected into the manufactured melt blown nonwoven fabric to bring the melt blown nonwoven fabric into thorough contact with water, and then the melt blown nonwoven fabric is dehydrated and dried to perform electret processing as in Patent Documents 1 and 2 have been disclosed. The technique of performing electret processing by bringing the fabric into contact with water does not use high-voltage equipment in contrast to the technique using corona discharge, and thus safety maintenance and management of the equipment are easy. On the other hand, it is necessary to apply a high water pressure to the melt blown nonwoven fabric in order to cause water to thoroughly permeate into and come in contact with the fine melt blown nonwoven fabric and the melt blown nonwoven fabric is substantially immersed, so there is a problem that the water content of the melt blown nonwoven fabric is large, and a large amount of energy is required for drying after dehydration.

In order to solve such a problem, as a method for reducing drying loads, there is a method of electret processing in which fine water droplets using a two-fluid spray nozzle are sprayed onto spun yarn before a melt blown nonwoven fabric is formed, as disclosed in Patent Documents 3 and 4. In this method, fine water droplets are sprayed onto the spun yarn in the open state before the yarn is formed into the melt blown nonwoven fabric, so even a small amount of water can be brought into thorough contact with the yarn. In addition, since the hot air used for spinning the molten polymer is directly diverted to the drying of water attached to the spun yarn, the drying load after forming the melt blown nonwoven fabric can be significantly reduced, or the drying step itself can be made unnecessary according to Patent Document 3.

### PRIOR ART DOCUMENT

### PATENT DOCUMENTS

Patent Document 1: Japanese Patent Laid-open Publication No. 2002-166114
Patent Document 2: Japanese Patent No. 3476804
Patent Document 3: WO 2003/060216
Patent Document 4: Japanese Patent Laid-open Publication No. 2002-161467 Documents KR 102 256 160 B1, KR 2016 0141384 A, US 2011/168024 A1, US 2013/288555 A1 and US 3 959 421 A disclose methods and apparatus for manufacturing electret meltblown nonwoven fabrics.

### SUMMARY OF THE INVENTION

### PROBLEMS TO BE SOLVED BY THE INVENTION

However, as disclosed in Patent Document 3, in the case of using a single-hole spray nozzle (conical nozzle) that injects water droplets in a conical shape for spraying water, since the conical nozzle has a discharge distribution in a mountain shape with respect to the width direction of the spun yarn, an equal amount of water droplets cannot be imparted in the width direction, and it is difficult to uniformly exhibit electret performance in the width direction. In addition, since the spray width in which a general single-hole nozzle can spray is about 300 mm at most, such a method cannot be applied for manufacturing a wide melt blown nonwoven fabric having a width wider than the spray width. Further, to be applied to such a wide melt blown nonwoven fabric, a method of arranging a plurality of single-hole nozzles at regular intervals in the width direction is conceivable, however, flying water droplets and air flows interfere with each other at a place where sprays between the nozzles overlap, and uniformity of the amount of water to be applied is significantly deteriorated in the width

direction, or the texture of the melt blown nonwoven fabric manufactured deteriorates due to turbulence of the air flow, and therefore, it is difficult to perform uniform electret processing which does not require a drying step over a wide range.

On the other hand, Patent Document 4 discloses, as a spray nozzle, a slit-shaped nozzle (slit-type nozzle) in which the water droplet injection opening extends in the width direction. Since such a slit-shaped nozzle ejects an infinite number of water droplets in a continuous band shape in the width direction, the variation in the amount of water droplets in the width direction can be made smaller than that of a single-hole nozzle, and the air flows do not interfere, so the texture of the melt blown nonwoven fabric can be prevented from deteriorating. However, since the slit-shaped opening has a larger total discharge opening cross-sectional area per spray width than a single-hole nozzle, it is necessary to increase the amount of water to be sprayed in order to uniformly spray water droplets in the width direction, and ultimately it is difficult to reduce the drying load.

The present invention has been made in view of the above problems, and aims to provide a method and an apparatus for manufacturing an electret melt blown nonwoven fabric that can perform electret processing more uniformly even in a wide width while reducing a drying load by spraying a small amount of water in a width direction with high accuracy.

## SOLUTIONS TO THE PROBLEMS

As a result of intensive studies on the above problems, the present inventors have found that, by discharging air and water from different discharge openings at a spray nozzle and generating fine water droplets outside the nozzle, water can be sprayed more uniformly in the width direction even with a low amount of water.

The present invention has been completed based on these findings, and according to the present invention, the following inventions are provided.

[1] A method for manufacturing an electret melt blown nonwoven fabric, in which, when a non-electroconductive polymer is melt-spun from a spinneret having a plurality of spinning holes in a width direction and a spun yarn is collected by a yarn collection device provided below to form a melt blown nonwoven fabric, water is sprayed by a spray nozzle onto the spun yarn between the spinneret and the yarn collection device to electretize the melt blown nonwoven fabric, the spray nozzle includes a plurality of water discharge openings arranged in the width direction and a pair of air discharge openings that are opened continuously or intermittently in the width direction and are arranged to face each other so as to sandwich the plurality of water discharge openings, and air discharged from the air discharge openings is made to collide with water discharged from the plurality of water discharge openings to spray the water on the spun yarn. The method for manufacturing an electret melt blown nonwoven fabric described in [1], in which a water/polymer percentage [%] represented by the formula is 300% or more and less than 500%.

[2]

$$\text{Formula: } (Wp/Wf) \times 100$$

(in which Wp represents a water discharge mass of the spray nozzle in a unit time per unit width, and Wf represents a discharge mass of the non-electroconductive polymer in a unit time per unit width).

[3] The method for manufacturing an electret melt blown nonwoven fabric described in [1] or [2], in which a horizontal distance from the spray nozzle to the spun yarn is 50 mm or more and 150 mm or less.

[4] The method for manufacturing an electret melt blown nonwoven fabric described in any one of [1] to [3], in which the spray nozzle is provided only on a transport direction side of the electret melt blown nonwoven fabric collected by the yarn collection device as seen from the spun yarn.

[5] An apparatus for manufacturing an electret melt blown nonwoven fabric, including a spinning section of spinning a non-electroconductive polymer, the section having a plurality of spinning holes in a width direction; a water spraying section of spraying water to the spun yarn discharged from the spinning section; and a sheet-making section of collecting the spun yarn, in which the water spraying section is a spray nozzle including a plurality of water discharge openings arranged in the width direction and a pair of air discharge openings that are opened continuously or intermittently in the width direction and are arranged to sandwich the plurality of water discharge openings, and causing air discharged from the air discharge openings to collide with water discharged from the plurality of water discharge openings.

## EFFECTS OF THE INVENTION

According to the present invention, since water can be more uniformly sprayed in the width direction with respect to the spun yarn, even if the melt blown nonwoven fabric has a wide width of, for example, 1 m or more, a homogeneous

electret melt blown nonwoven fabric can be produced. In addition, even under a spinning condition where the polymer discharge amount is small, since the spray amount of water can be reduced in accordance with the discharge amount, the energy required for the drying step can be reduced. Thus, it is possible to achieve both improvement in quality of the wide electret melt blown nonwoven fabric and improvement in production efficiency (widening and energy saving), and it is possible to stably obtain a melt blown nonwoven fabric having low pressure loss over the entire width and excellent dust collection efficiency. Therefore, it is possible to easily and inexpensively provide a filter material particularly suitable for an air filter or the like.

In addition, in the present invention, the spun yarn is rapidly cooled from the spinneret to the yarn collection device by spraying water from the spray nozzle. For this reason, a melt blown nonwoven fabric having an amorphous portion formed in the spun yarn, stress that is easily dispersed when pulled, and high elongation, and that is difficult to break can be obtained.

BRIEF DESCRIPTION OF THE DRAWINGS

Fig. 1 is a sectional conceptual view illustrating a device for carrying out a method for manufacturing an electret melt blown nonwoven fabric of the present invention.

Fig. 2 is a cross-sectional view at the center in the width direction of a spray nozzle to illustrate and explain a schematic structure thereof according to the present invention.

Fig. 3 is a front view illustrating and explaining a configuration of a tip of the spray nozzle according to the present invention.

Fig. 4 is an exploded perspective view illustrating and explaining a configuration of the spray nozzle according to the present invention.

Fig. 5 is a schematic cross-sectional view for describing a dust collection efficiency measurement device for measuring dust collection efficiency and pressure loss of an electret melt blown nonwoven fabric according to the present invention.

EMBODIMENTS OF THE INVENTION

In the present invention, an electret melt blown nonwoven fabric is manufactured by melt-spinning a non-electroconductive polymer from a spinneret, and directly fabricating a spun yarn thereof on a yarn collection device such as a conveyor or a drum provided with a yarn collection net.

The non-electroconductive polymer is not particularly limited as long as it has a non-electroconductive property. It is preferable that a polymer having a volume resistivity of $10^{12} \cdot \Omega\cdot$cm or more, more preferably $10^{14} \cdot \Omega\cdot$cm or more be contained. Examples of the polymer include polyolefins such as polyethylene and polypropylene, polyesters such as polyethylene terephthalate and polylactic acid, polycarbonate, polystyrene, polyphenylene sulfite, fluorine-based resins, and mixtures thereof. Among these, materials having a polyolefin or a polylactic acid as a main component are preferable from the viewpoint of electret performance, and materials containing polypropylene as a main component are more preferable. Further, the main component mentioned here means that it accounts for 50 mass% or more of the entire components.

In the present invention, at least one type of a hindered amine-based additive or a triazine-based additive is preferably blended into the nonwoven fabric obtained from the non-electroconductive polymer. This is because when this additive is contained in the nonwoven fabric, particularly high electret performance can be maintained. This additive is preferably blended into the non-electroconductive polymer before melt spinning.

Examples of the hindered amine-based compound of the two types of additives include poly[(6-(1,1,3,3-tetramethylbutyl)imino-1,3,5-triazin-2,4-diyl) ((2,2,6,6-tetramethyl-4-piperidyl)imino)hexamethylene((2,2,6,6-tetramethyl-4-piperidyl)imino)] ("Chimassorb" (registered trademark) 944LD manufactured by BASF Japan Ltd.), dimethyl succinate-1-(2-hydroxyethyl)-4-hydroxy-2,2,6,6-tetramethylpiperidine polycondensate ("Tinuvin" (registered trademark) 622LD manufactured by BASF Japan Ltd.), and 2-(3,5-di-t-butyl-4-hydroxybenzyl)-2-n-butylmalonate bis(1,2,2,6,6-pentamethyl-4-piperidyl) ("Tinuvin" (registered trademark) 144 manufactured by BASF Japan Ltd.).

In addition, examples of the triazine-based additive include poly[(6-(1,1,3,3-tetramethylbutyl)imino-1,3,5-triazin-2,4-diyl) ((2,2,6,6-tetramethyl-4-piperidyl)imino)hexamethylene((2,2,6,6-tetramethyl-4-piperidyl)imino)] ("Chimassorb" (registered trademark) 944LD manufactured by BASF Japan Ltd.) and 2-(4,6-diphenyl-1,3,5-triazin-2-yl)-5-((hexyl)oxy)phenol ("Tinuvin" (registered trademark) 1577FF manufactured by BASF Japan Ltd.).

Among them, it is particularly preferable to use a hindered amine-based additive.

In addition to the above-described additives, known additives generally used for non-electroconductive nonwoven fabrics of electret-processed products, such as a heat stabilizer, a weatherproofing agent, and a polymerization

inhibitor, may be added to the nonwoven fabric obtained from the non-electroconductive polymer.

An addition amount of the hindered amine-based additive or the triazine-based additive is not particularly limited, but is preferably in the range of 0.5 to 5 mass%, and more preferably in the range of 0.7 to 3 mass% with respect to the mass of the nonwoven fabric. By setting the addition amount to 0.5 mass% or more, target high-level electret performance can be easily obtained. In addition, when the amount is 5 mass% or less, the spinnability and the fabric forming properties can be improved, and the cost aspect is more advantageous.

The method of the present invention for manufacturing the electret melt blown nonwoven fabric as described above will be described in detail with reference to the drawings. Further, the following description is given to facilitate understanding of the present invention, and does not limit the present invention at all. The scope of rights of the present invention is not limited to the following embodiments, and includes all modifications within the scope equivalent to the configurations described in the claims.

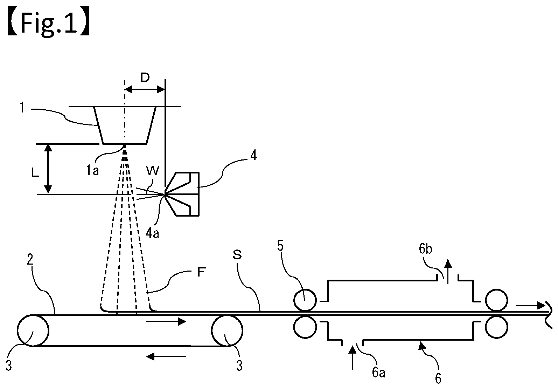

Fig. 1 illustrates a device for carrying out a method for manufacturing an electret melt blown nonwoven fabric of the present invention. In the apparatus of Fig. 1, reference numeral 1 denotes a spinneret for melt spinning, a plurality of spinning holes 1a are arranged in a row in a width direction, that is, a direction orthogonal to the paper surface on the lower surface of the spinneret 1, and a molten polymer which is a non-electroconductive polymer is discharged vertically downward from the spinning holes 1a. Slit holes (not illustrated) whose longitudinal direction is the width direction are provided on both sides of the spinning hole 1a, and slit holes inject hot air to cause the discharged molten polymer to be stretched and spun as a spun yarn F. A collection net 2 for collecting the spun yarn F is disposed below the spinneret 1, and a transport conveyor is configured to be endlessly wound around rolls 3 and 3 and move in the arrow direction. Furthermore, a spray nozzle 4 whose longitudinal direction is the width direction is provided between the spinneret 1 and the yarn collection net 2 at a constant distance with respect to the spun yarn F, and water is sprayed from the tip 4a of the spray nozzle 4 to the spun yarn. At this time, it is preferable to install the nozzle such that the water-spraying direction is a direction orthogonal to the spun yarn, that is, a horizontal direction. By installing the nozzle in this manner, the inertial force of the sprayed water droplets is less likely to be lost by the hot air, and a large amount of water can be efficiently attached to the spun yarn.

In addition, the tip 4a of the spray nozzle 4 is preferably set such that a distance L from the lower surface of the spinneret 1 toward lower (a distance in the vertical direction) is 30 mm or more and 250 mm or less. By spraying water to a position 30 mm or farther away from the spinneret, heat deactivation at the time of electret can be suppressed. In addition, by spraying water in a range where the distance from the spinneret is 250 mm or less, the water can be dried using the heat of the polymer at the time of spinning, and the heating means for forcibly drying the water in the subsequent step can be downscaled or reduced. The distance L is more preferably within a range of 40 mm or more and 200 mm or less, and still more preferably within a range of 50 mm or more and 150 mm or less.

In addition, the distance D from the tip 4a of the spray nozzle 4 to the spun yarn (a line drawn vertically downward from the spinning holes) is desirably in the range of 50 mm or more and 150 mm or less. When the tip 4a is separated from the spun yarn by 50 mm or more in the horizontal direction, water droplets discharged from the plurality of water discharge openings are sufficiently diffused and have a continuous distribution, so the water can be sprayed to the spun yarn uniformly in the width direction. Furthermore, by installing the tip 4a in a range of 150 mm or less in the horizontal direction from the spun yarn, it is possible to prevent the air discharged from an air discharge opening from being lost by the hot air accompanying the spun yarn and to sufficiently attach water to the spun fibers. The distance D is more preferably 60 mm or more and 140 mm or less, still more preferably 70 mm or more and 130 mm or less.

In addition, although the spray nozzle 4 may be provided on both of the left side and the right side of the spun yarn F in Fig. 1, or only on either of the left side and the right side, the spray nozzle 4 is preferably provided only on the right side, that is, only on the side in which the electret melt blown nonwoven fabric collected by the yarn collection net 2 is transported. By installing the spray nozzle only on the transport direction side, it is possible to prevent water droplets that do not adhere to the fibers but penetrate through the thread from falling on the yarn collection conveyor and adhering to the nonwoven fabric after yarn collection, such that the drying properties are enhanced.

Further, the number of spray nozzles 4 to be installed may be two or more, but is preferably one. If two or more spray nozzles are installed, the air discharged from each of the spray nozzles interferes and disturbs the air flow, which may deteriorate the quality of the melt blown nonwoven fabric, however, if one spray nozzle is installed, such interference in the air flow does not occur, and a high-quality melt blown nonwoven fabric can be obtained.

Furthermore, a water/polymer percentage [%] for the amount of water sprayed represented by the following formula is preferably 300% or more and less than 500%:

$$(Wp/Wf) \times 100$$

(in which Wp represents a water discharge mass of the spray nozzle in a unit time per unit width, and Wf represents a discharge mass of the non-electroconductive polymer in a unit time per unit width). If the water/polymer percentage is less

than 500%, moisture is sufficiently evaporated by the heat amount of the spun polymer, and even when the polymer discharge amount is small, a high-quality electret melt blown nonwoven fabric can be obtained without the drying step. On the other hand, if the water/polymer percentage is 300% or more, the charge amount of the nonwoven fabric becomes sufficient, and an electret melt blown nonwoven fabric exhibiting high dust collection efficiency can be obtained.

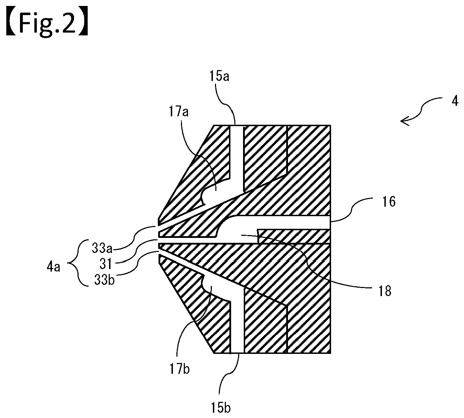

Next, the spray nozzle will be described in detail. In the present invention, the spray nozzle includes a plurality of water discharge openings arranged in the same direction as the width direction of the spinneret for melt spinning, and a pair of air discharge openings that are opened continuously or intermittently in the width direction and arranged to face each other to sandwich the plurality of water discharge openings; specifically, the spray nozzle may have a configuration as illustrated in, for example, Figs. 2 to 4.

Fig. 2 is a cross-sectional view of the center of the spray nozzle in the width direction to describe a schematic structure thereof. In the spray nozzle 4 illustrated in Fig. 2, water is supplied from a water supply opening 16, spread in the width direction by a water manifold 18, and discharged from at water discharge opening 31 provided at the tip 4a of the spray nozzle 4. In addition, air is supplied from each of air supply openings 15a and 15b, spread in the width direction by air manifolds 17a and 17b, and discharged from the air discharge openings 33a and 33b. With such a configuration, air discharged from the air discharge openings 33a and 33b collides with the water discharged from the water discharge opening 31, and the water is formed into fine water droplets by the striking force of the air.

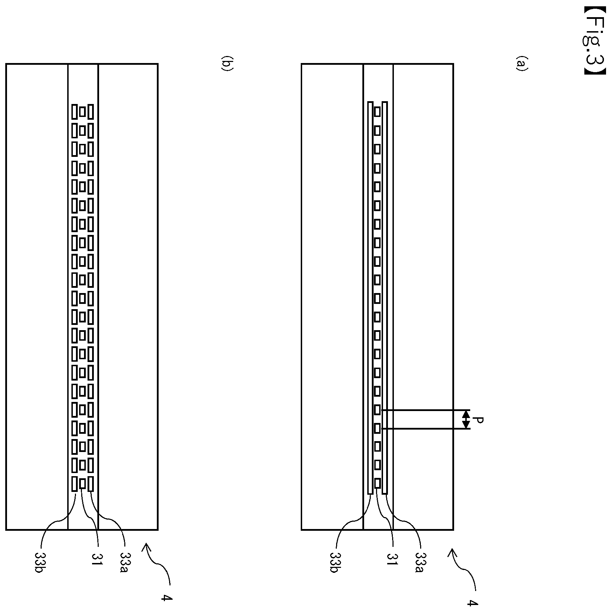

Next, Fig. 3(a) is a front view illustrating a configuration of the tip of the spray nozzle 4. Further, in order to facilitate understanding of the drawing, the longitudinal direction of the nozzle is shortened. At the tip of the spray nozzle 4 illustrated in Fig. 3 (a), each water discharge opening 31 has a rectangular opening end, and a plurality of water discharge openings are arranged at equal intervals in the width direction of the spray nozzle such that the openings are in a wider range than the discharge width of the molten polymer discharged from the spinneret for melt spinning as a whole. Further, an arrangement pitch P of the water discharge openings 31 is preferably 10 mm or less from the viewpoint of uniformity of water droplets in the width direction.

In addition, in the spray nozzle 4, a pair of slit-shaped air discharge openings 33a and 33b are arranged to face each other in the vicinity of the plurality of water discharge openings 31 such that the air discharge openings sandwich the plurality of water discharge openings 31. At this time, the width of the air discharge openings is wider than the entire width of the water discharge openings in order to make all the water discharged from each of the water discharge openings 31 to be fine water droplets by a uniform striking force of air. Further, each of the air discharge openings 33a and 33b may be opened in one slit continuous in the width direction as illustrated in Fig. 3(a), or may be opened intermittently corresponding to the water discharge openings 31 as illustrated in Fig. 3(b). In addition, in the case of intermittent openings, the opening may be circular, elliptical, or the like. In the case of intermittent opening, the opening width is preferably larger than the opening width of the water discharge openings.

In the present invention as described above, since water is discharged not from one slit-shaped discharge opening extending in the width direction but from the plurality of water discharge openings arranged intermittently in the width direction, even when the water discharge flow rate is low, water can be discharged more uniformly in the width direction. In addition, since the substantial continuous belt-like air is discharged in the width direction by using the continuous or intermittent air discharge openings in the width direction, it is possible to prevent the interference of the airflow that is likely to deteriorate the texture of the melt blown nonwoven fabric. Due to the combination of the water and air discharge structures, water can be more uniformly sprayed to the spun yarn in the sheet width direction while reducing the discharge flow rate of water.

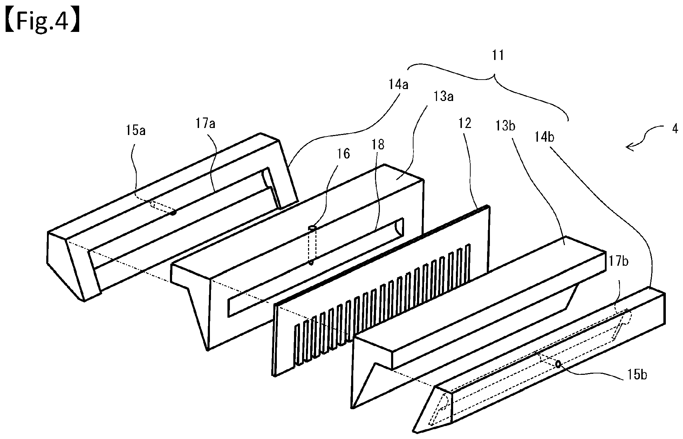

Next, Fig. 4 is an exploded perspective view for describing a configuration of the spray nozzle 4. Further, in order to facilitate understanding of the drawing, the longitudinal direction of the nozzle is shortened. In Fig. 4, a main body housing 11 of the spray nozzle 4 includes components denoted by reference numerals 12, 13a, 13b, 14a, and 14b. Reference numerals 13a and 13b denote inner blocks for forming the water manifolds and the water discharge openings. One inner block 13a has a water supply opening 16 for receiving water and a water manifold 18 for spreading the water in the width direction, and the water supply opening 16 communicates with the water manifold 18. Next, reference numeral 12 denotes a comb-shaped shim sandwiched between the inner blocks 13a and 13b, and when the inner blocks 13a and 13b and the shim 12 are combined, a plurality of discharge openings are formed in the width direction by a gap between comb teeth of the shim 12. Reference numerals 14a and 14b denote outer blocks, which are combined with the inner blocks 13a and 13b to form air discharge openings for discharging air. Further, the shape of the air discharge openings in the aspect illustrated in Fig. 4 is one slit continuous in the width direction. In addition, the outer blocks 14a and 14b have air supply openings 15a and 15b for receiving air and air manifolds 17a and 17b for spreading the air in the width direction on the mating surface side with the outer blocks 14a and 14b, respectively, and the air supply openings 15a and 15b communicate with the air manifolds 17a and 17b.

The spray nozzle 4 as described above is disposed between the spinneret 1 and the yarn collection net 2 constituting the transport conveyor as illustrated in Fig. 1, and sprays water to the spun yarn melt-spun from the spinneret. In addition, the spun yarn F to which water has been sprayed is collected by the yarn collection net 2 to be formed into a nonwoven fabric S.

Further, the water used for spraying is obtained by removing dirt with a liquid filter or the like, and water as clean as possible is preferably used. In particular, it is preferable to use pure water such as ion-exchanged water, distilled water, or water filtered by a reverse osmosis membrane. In addition, a conductivity level of pure water is preferably $10^3$ μS/m or less, or more preferably $10^2$ μS/m or less.

Then, the nonwoven fabric S is nipped by a feed roller 5 to remove excess water, and then transported to a drying device 6. Further, this step may be performed as necessary, and may be omitted.

The drying device 6 receives supply of heated air from a supply opening 6a and discharges the heated air from an exhaust opening 6b to heat the inside. The nonwoven fabric S enters the drying device 6 to be heated and dried as necessary, and is transported as an electretized sheet.

The electret melt blown nonwoven fabric thus obtained is a high-quality and high-performance electret processed product in which high charges are uniformly distributed in the width direction.

Further, when water W is sprayed from the nozzle 4 such that the water/polymer percentage is less than 500%, moisture is sufficiently evaporated by the heat amount of the spun polymer, and thus even when the polymer discharge amount is small, a high-quality electret melt blown nonwoven fabric can be obtained without the drying step. Therefore, it is also possible to provide a manufacturing apparatus not including the drying device 6.

In addition, fibers constituting the electret melt blown nonwoven fabric preferably have an average single fiber diameter of 0.1 μm or more and 8.0 μm or less. The strength of the fiber sheet can be improved by setting the average single fiber diameter to preferably 0.1 μm or more, more preferably 0.3 μm or more, and still more preferably 0.5 μm or more. On the other hand, when the average single fiber diameter is set to 8.0 μm or less, more preferably 7.0 μm or less, and further preferably 5.0 μm or less, the dust collection efficiency of the electret melt blown nonwoven fabric can be improved.

Further, the average single fiber diameter is calculated as follows. First, 15 measurement samples of 3 mm × 3 mm are collected from a total of 15 points on the fiber sheet including 3 points in the width direction (2 point on a side end portion and 1 point at the center) and 5 points at the intervals of 5 cm thereof in the longitudinal direction, the magnification of a scanning electron microscope (for example, "VHX-D500" manufactured by KEYENCE CORPORATION, or the like) is adjusted to 3000 times, and each of fiber surface photographs is taken from the collected measurement samples to make a total of 15 photographs. Then, the single fiber diameters of all the fibers whose fiber diameters (single fiber diameters) can be clearly confirmed in the photographs are measured, and the value obtained by rounding off the second decimal place of the arithmetic average value thereof to the first decimal place is taken as the average single fiber diameter.

In addition, fibers constituting the electret melt blown nonwoven fabric preferably have an average fiber refractive index of 1.10 or more and 1.50 or less. By setting the average fiber refractive index to preferably 1.10 or more, and more preferably 1.30 or more, voids between fibers are widened, and an electret melt blown nonwoven fabric having high bulkiness, low pressure loss, and high tensile elongation can be obtained. On the other hand, by setting the average fiber refractive index to 1.50 or less, and more preferably 1.40 or less, the rigidity of the fibers is increased, and an electret melt blown nonwoven fabric having high form stability can be obtained.

Further, the average fiber refractive index is calculated as follows. First, 15 measurement samples of 3 mm × 3 mm are collected from a total of 15 points on the nonwoven fabric including 3 points in the width direction (2 points on a side end portion and 1 point at the center) and 5 points at the intervals of 5 cm thereof in the longitudinal direction, the magnification of a scanning electron microscope (for example, "VHX-D500" manufactured by KEYENCE CORPORATION, or the like) is adjusted to 200 times, and each of fiber surface photographs is taken from the collected measurement samples to make a total of 15 photographs. Then, for all fibers whose fiber lengths are clearly confirmed to be 750 μm or more in the photographs, the straight line distance (L1) between both ends of the fibers and the actual fiber length (L2) are measured, the respective refractive indexes (L2/L1) are calculated, and the value obtained by rounding off the third decimal place of the arithmetic average value thereof to the second decimal place is taken as the average fiber refractive index.

In the present invention, the average fiber refractive index of polyolefin-based resin fibers in the electret melt blown nonwoven fabric can be controlled by performing an appropriate rapid cooling process from one direction immediately after spinning of the polyolefin-based resin fibers. Specifically, control can be performed by blowing water or cold air from one direction immediately after spinning or spraying water from one direction during spinning. Among these, the method of spraying water is most desirable because an electret process can also be performed.

A spray amount of water is not particularly limited as long as the spun yarn is in contact with water, and the spray amount may be appropriately adjusted to gain a target fiber refractive index, however, since a drying step during the electret process is unnecessary, it is more desirable that the water/polymer percentage [%] is 300% or more and less than 500%.

EXAMPLES

Next, the present invention will be described more specifically with reference to Examples. Physical property

values used in Examples were measured by using the following measurement method.

(1) Basis weight (g/m$^2$)

The masses of three points of a nonwoven fabric each 15 cm in length and 15 cm in width were measured, the obtained values were converted into values per square meter, and the mean value was calculated and set as a basis weight (g/m$^2$).

(2) Average single fiber diameter (μm)

15 measurement samples of 3 mm × 3 mm were collected from a total of 15 points 3 points in the width direction of the nonwoven fabric (2 points on the side end portion and 1 point at the center) and 5 points at intervals of 5 cm in the longitudinal direction, and the magnification was adjusted to 3000 times with "VHX-D500" manufactured by KEYENCE CORPORATION, and each of fiber surface photographs was taken from the collected measurement samples to make a total of 15 photographs. The single fiber diameters were measured for all the fibers in which the fiber diameter (single fiber diameter) could be clearly confirmed in the photographs, and the value obtained by rounding off the second decimal place of the arithmetic average value thereof to the first decimal place was taken as the average single fiber diameter (μm).

(3) Dust collection efficiency (%) and pressure loss (Pa)

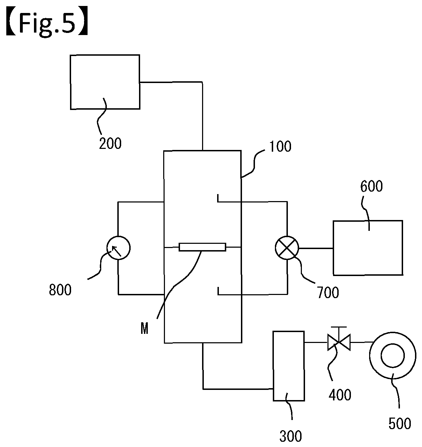

From any five places in a nonwoven fabric, measurement samples each 15 cm in length and 15 cm in width were collected, and measurement was performed with a dust collection efficiency measurement device illustrated in Fig. 5 for the samples. The dust collection efficiency measurement device includes a sample holder 100 to hold a measurement sample M that is connected to a dust storage box 200 on the upstream side, and a flow meter 300, a flow control valve 400, and a blower 500 connected to the downstream side. In addition, the sample holder 100 is equipped with a particle counter 600 and the number of dust particles can be measured at each of the upstream and downstream sides of the measurement sample M by operating a switch cock 700. Furthermore, the sample holder 100 also includes a pressure gauge 800, from which the static pressure difference between the upstream side and the downstream side of the measurement sample M can be read.

In the measurement of the dust collection efficiency, a polystyrene 0.309U 10% solution (manufacturer: NACALAI TESQUE, INC.) was diluted to 200 times with distilled water, and a dust storage box 200 was filled therewith. Next, the measurement sample M was placed in the sample holder 100, an airflow was adjusted with the flow control valve 400 so that the air passed through the filter at a velocity of 4.5 m/min., the dust concentration was maintained at a range of 10,000 to 40,000 particles/2.83 × 10$^{-4}$ m$^3$(0.01 ft$^3$), the number of dust particles at the upstream side (D) and the number of dust particles at the downstream side (d) were measured for the sample M using the particle counter 600 (KC-01B manufactured by RION Co., Ltd.), the measurement was repeated three times for each measurement sample, the dust collection efficiency (%) of particles having a diameter of 0.3 to 0.5 μm was calculated using the following formula based on JIS K 0901:1991 "form, size and performance testing methods of filtration media for collecting airborne particulate matters". The average value (%) of the five measurement samples was rounded off to the third decimal place to obtain the final dust collection efficiency.

$$\text{Dust collection efficiency (\%)} = [1 - (\Sigma d/\Sigma D)] \times 100$$

Provided that

$\Sigma d$: Total number of downstream dust particles d measured three times
$\Sigma D$: Total number of upstream dust particles D measured three times

The higher the degree of dust collection of nonwoven fabric, the smaller the number of dusts on the downstream, and thus the higher the value of the dust collection efficiency.

In addition, the pressure loss (Pa) was obtained by reading the difference in static pressure between the upstream side and the downstream side of the measurement samples M at the time of dust collection efficiency measurement with the pressure gauge 800. The average value (Pa) of the five measurement samples was rounded off to the first decimal place to obtain the final pressure loss.

(4) QF value (Pa$^{-1}$)

The value of QF (Pa$^{-1}$) as an index of the filtration performance is calculated from the dust collection efficiency (%)

and the pressure loss (Pa) in accordance with the following formula. The lower the pressure loss and the higher the dust collection efficiency, the higher the QF value and the better the filtration performance.

QF value =-[ln(1- dust collection efficiency (%)/100)]/pressure loss (Pa).

(5) Average fiber refractive index (-)

For an average fiber refractive index, a total of 15 measurement samples of 3 mm × 3 mm were collected from a total of 15 points including 3 points in the width direction of the nonwoven fabric (2 points on the side end portion and 1 point at the center) and 5 points at the intervals of 5 cm in the longitudinal direction, and the magnification was adjusted to 200 times with "VHX-D500" manufactured by KEYENCE CORPORATION, and each of fiber surface photographs was taken from the collected measurement samples to make a total of 15 photographs. For all fibers for which it can be clearly confirmed in the photographs that the fiber length is 750 μm or more, the straight line distance (L1) between both ends of the fibers and the actual fiber length (L2) were measured, the respective refractive indices (L2/L1) were calculated, and the value obtained by rounding off the third decimal place of the arithmetic average value thereof to the second decimal place was taken as the average fiber refractive index (unitless). The average fiber refractive index becomes closer to 1.00 as the fibers are more linear, and the average fiber refractive index becomes larger than 1 as the fibers are more greatly bent.

(6) Appearance quality

The obtained nonwoven fabric was visually observed, and a nonwoven fabric in which the increase or decrease of unevenness could not be determined was evaluated as "good", and a nonwoven fabric in which unevenness was apparently increased was evaluated as "poor", as compared with a nonwoven fabric (non-electret processed product) manufactured in the same manner except that water was not sprayed.

[Example 1]

Polypropylene (MFR=850) to which 1 mass% of "KIMASORB" (registered trademark) 944 (manufactured by BASF Japan Ltd.) was added was input into an extruder, a spray nozzle in the form shown in Fig. 2, Fig. 3 (a) and Fig. 4 was provided at a position of 100 mm in the horizontal direction from the spun yarn and 120 mm below the spinneret in the meltblowing apparatus as shown in Fig. 1, and water was applied to the spun yarn so that the water/polymer percentage was 657% to manufacture a melt blown nonwoven fabric having a width of 1.2 m. Since the manufactured nonwoven fabric contained moisture, it was further hot-air dried by using the drying device 6 illustrated in Fig. 1.

[Example 2]

A melt blown nonwoven fabric was manufactured in the same manner as in Example 1 except that the water/polymer percentage was changed to 328%. Since the obtained nonwoven fabric was dried at the stage in which the spun yarn was collected by the yarn collection net, the drying device 6 was not used.

[Example 3]

A melt blown nonwoven fabric was manufactured in the same manner as in Example 2 except that the water/polymer percentage was changed to 468%. Since the obtained nonwoven fabric was dried at the stage in which the spun yarn was collected by the yarn collection net, the drying device was not used.

[Comparative Example 1]

A melt blown nonwoven fabric was manufactured in the same manner as in Example 1 except that 8 conical nozzles ("AKIMist" (registered trademark) manufactured by H. IKEUCHI CO., LTD.) were uniformly arranged at intervals of 130 mm in place of the spray nozzle 4. Since the manufactured nonwoven fabric contained moisture, it was further hot-air dried by using the drying device 6 illustrated in Fig. 1.

[Comparative Example 2]

A melt blown nonwoven fabric was manufactured in the same manner as in Example 1 except that the spray nozzle 4 was changed to a slit-shaped nozzle ("Slit nozzle PSN" manufactured by H. IKEUCHI CO., LTD., SUS304) having a single water discharge opening of 1200 mm × 0.05 mm. However, under this condition, since the amount of water to be

sprayed is smaller than the lower limit amount of water that can be normally sprayed by the slit nozzle, the spray of water is uneven in the width direction, and there is a portion where water is not obviously sprayed from the nozzle in a part of the width direction, and measurement of physical properties cannot be performed.

[Comparative Example 3]

A melt blown nonwoven fabric was manufactured in the same manner as in Example 1 except that, in place of the spray nozzle 4, 8 single-hole spray nozzles for spraying water in a fan shape ("SU13 A-SS" manufactured by Spraying Systems Co.) were uniformly arranged at intervals of 130 mm. Since the manufactured nonwoven fabric contained moisture, it was further hot-air dried by using the drying device illustrated in Fig. 1.

[Comparative Example 4]

A melt blown nonwoven fabric was manufactured in the same manner as in Comparative Example 1 except that the water/polymer percentage was changed to 468%. Since the manufactured nonwoven fabric had a portion partially containing moisture in the width direction, the nonwoven fabric was further hot-air dried by using the drying device illustrated in Fig. 1.

Physical property values, appearance quality, and evaluation results on the presence or absence of the drying step of the nonwoven fabrics manufactured in Examples and Comparative Examples are summarized in Table 1.

[Table 1]

| | | Example 1 | Example 2 | Example 3 | Comparative Example 1 | Comparative Example 2 | Comparative Example 3 | Comparative Example 4 |
|---|---|---|---|---|---|---|---|---|
| Basis weight | $g/m^2$ | 20 | 20 | 20 | 20 | 20 | 20 | 20 |
| Average single fiber diameter | μm | 2.3 | 2.3 | 2.2 | 2.3 | 2.3 | 2.3 | 2.3 |
| Average fiber refractive index | - | 1.33 | 1.15 | 1.20 | 1.23 | - | 1.20 | 1.15 |
| Water/polymer percentage | % | 657 | 328 | 468 | 657 | 657 | 657 | 468 |
| Dust collection efficiency | % | 99.995 | 99.985 | 99. 995 | 99.325 | - | 98.727 | 90.558 |
| Pressure loss | Pa | 46.6 | 46.1 | 47.3 | 48.8 | - | 46.5 | 47.2 |
| QF value | $Pa^{-1}$ | 0.211 | 0.190 | 0.210 | 0.102 | - | 0.094 | 0.050 |
| Drying step | | Necessary | Unnecessary | Unnecessary | Necessary | - | Necessary | Necessary |
| Appearance quality | | Good | Good | Good | Poor | - | Poor | Poor |

As is apparent from Table 1, in Examples 1 to 3, by using a spray nozzle that sprays water to spun yarn by discharging and colliding air from an air discharge opening with water discharged from a plurality of water discharge openings, water was sprayed uniformly, and as a result, electret melt blown nonwoven fabrics having good appearance quality, fibers bending as well as an average fiber refractive index of 1.15 to 1.33, the sheets being uniformly charged, and high filtration performance with a QF value of 0.190 or more could be manufactured. In addition, in Examples 2 and 3, by setting the water/polymer percentage to 300% or more and less than 500%, electret melt blown nonwoven fabrics having a QF value of 0.190 or more and high filtration performance could be manufactured by using an energy-saving manufacturing method without using a drying device.

On the other hand, in Comparative Examples 1 and 3, although a sufficient amount of water was sprayed, the performance was low due to the QF value of 0.102 or less, and an electret melt blown nonwoven fabric having sufficient performance could not be obtained. In any case, since striped unevenness extending in the transport direction was found in the manufactured nonwoven fabrics, it is considered that water droplets and air flows interfered between the single-hole type nozzles, unevenness in the charged state in the width direction and unevenness in the pressure loss occurred, and as a result, the filtration performance varied in the surfaces of the samples, and therefore the average QF value in the sample sizes decreased. Next, in Comparative Example 2, since there was a portion where water was not partially sprayed in the width direction of the nonwoven fabric, the nonwoven fabric was determined to be poor without performing detailed evaluation. Next, in Comparative Example 4, although the amount of water sprayed was the same as that in Example 3, spray unevenness was large due to interference of water droplets between the nozzles, so the nonwoven fabric was partially wet, and the drying step could not be made unnecessary. In addition, for the same reason as that in Comparative Examples 1 and 3, the performance was low due to the low QF value of 0.050, and thus a wide electret melt blown nonwoven fabric having sufficient performance could not be obtained.

## INDUSTRIAL APPLICABILITY

The high quality wide electret melt blown nonwoven fabric obtained from the present invention can be incorporated into a frame material with the form of a sheet and used as a filter unit. In addition, it is particularly suitable for high-performance applications of air filters in general, in particular, air conditioning filters, air purifier filters, and automobile cabin filters as an air filter material. At that time, pleating in which mountain folds and valley folds are repeated is performed, and the pleating is set on a frame member, whereby it can also be used as a filter unit.

## DESCRIPTION OF REFERENCE SIGNS

1: Spinneret for melt spinning
1a: Spinning hole
2: Yarn collection net
3: Roll
4: Spray nozzle
4a: Tip of spray nozzle
5: Roller
6: Drying device
6a: Supply opening
6b: Exhaust opening
11: Main body housing
12: Shim
13a, 13b: Inner block
14a, 14b: Outer block
15a, 15b: Air supply opening
16: Water supply opening
17a, 17b: Air manifold
18: Water manifold
31: Water discharge opening
33a, 33b: Air discharge opening
100: Sample holder
200: Dust storage box
300: Flow meter
400: Flow control valve

500: Blower
600: Particle counter
700: Switch cock
800: Pressure gauge
F: Spun yarn
W: Water
S: Nonwoven fabric
M: Measurement sample

## Claims

1. A method for manufacturing an electret melt blown nonwoven fabric,

   wherein, when a non-electroconductive polymer is melt-spun from a spinneret having a plurality of spinning holes in a width direction and a spun yarn is collected by a yarn collection device provided below to form a melt blown nonwoven fabric, water is sprayed by a spray nozzle onto the spun yarn between the spinneret and the yarn collection device to electretize the melt blown nonwoven fabric,
   the spray nozzle includes a plurality of water discharge openings arranged in the width direction and a pair of air discharge openings that are opened continuously or intermittently in the width direction and are arranged to face each other so as to sandwich the plurality of water discharge openings, and
   air discharged from the air discharge openings is made to collide with water discharged from the plurality of water discharge openings to spray the water on the spun yarn.

2. The method for manufacturing an electret melt blown nonwoven fabric according to claim 1, wherein a water/polymer percentage [%] represented by the formula is 300% or more and less than 500%:

   $$\text{formula: } (Wp/Wf) \times 100$$

   (wherein Wp represents a water discharge mass of the spray nozzle in a unit time per unit width, and Wf represents a discharge mass of the non-electroconductive polymer in a unit time per unit width).

3. The method for manufacturing an electret melt blown nonwoven fabric according to claim 1 or 2, wherein a horizontal distance from the spray nozzle to the spun yarn is 50 mm or more and 150 mm or less.

4. The method for manufacturing an electret melt blown nonwoven fabric according to claim 1 or 2, wherein the spray nozzle is provided only on a transport direction side of the electret melt blown nonwoven fabric collected by the yarn collection device as seen from the spun yarn.

5. An apparatus for manufacturing an electret melt blown nonwoven fabric, comprising:

   a spinning section of spinning a non-electroconductive polymer, the section having a plurality of spinning holes in a width direction;
   a water spraying section of spraying water to the spun yarn discharged from the spinning section; and
   a sheet-making section of collecting the spun yarn,
   wherein the water spraying section is a spray nozzle including a plurality of water discharge openings arranged in the width direction and a pair of air discharge openings that are opened continuously or intermittently in the width direction and are arranged to sandwich the plurality of water discharge openings, and causing air discharged from the air discharge openings to collide with water discharged from the plurality of water discharge openings.

## Patentansprüche

1. Verfahren zur Herstellung eines schmelzgeblasenen Elektret-Vliesstoffs,

   wobei, wenn ein nichtelektroleitfähiges Polymer aus einer Spinndüse, die eine Vielzahl von Spinnlöchern in einer Breitenrichtung aufweist, schmelzgesponnen wird und ein gesponnenes Garn durch eine unterhalb bereitge-

stellte Garnaufnahmevorrichtung aufgenommen wird, um einen schmelzgeblasenen Vliesstoff auszubilden, Wasser durch eine Sprühdüse auf das gesponnene Garn zwischen der Spinndüse und der Garnaufnahmevorrichtung gesprüht wird, um den schmelzgeblasenen Vliesstoff zu elektretisieren,
wobei die Sprühdüse eine Vielzahl von Wasserablassöffnungen, die in der Breitenrichtung angeordnet sind, und ein Paar von Luftablassöffnungen umfasst, die kontinuierlich oder unterbrochen in die Breitenrichtung geöffnet werden und angeordnet sind, um einander zugewandt zu sein, sodass die Vielzahl von Wasserablassöffnungen sandwichartig davon umgeben sind, und
wobei Luft, die aus den Luftablassöffnungen abgelassen wird, mit dem Wasser, das aus der Vielzahl von Wasserablassöffnungen abgelassen wird, zur Kollision gebracht wird, um das Wasser auf das gesponnene Garn zu sprühen.

**2.** Verfahren zur Herstellung eines schmelzgeblasenen Elektret-Vliesstoffs nach Anspruch 1, wobei ein Wasser/-Polymer-Prozentanteil [%], dargestellt durch die folgende Formel, 300 % oder mehr und weniger als 500 % beträgt:

$$\text{Formel: } (Wp/Wf) \times 100,$$

(worin Wp für eine Wasserablassmasse der Sprühdüse in einer Einheitszeit pro Einheitsbreite steht und Wf für eine Ablassmasse des nichtelektroleitfähigen Polymers in einer Einheitszeit pro Einheitsbreite steht).

**3.** Verfahren zur Herstellung eines schmelzgeblasenen Elektret-Vliesstoffs nach Anspruch 1 oder 2, wobei ein horizontaler Abstand von der Sprühdüse zu dem gesponnen Garn 50 mm oder mehr und 150 mm oder weniger beträgt.

**4.** Verfahren zur Herstellung eines schmelzgeblasenen Elektret-Vliesstoffs nach Anspruch 1 oder 2, wobei die Sprühdüse nur auf einer Transportrichtungsseite des schmelzgeblasenen Elektret-Vliesstoffs, der durch die Garnaufnahmevorrichtung aufgenommen wird, wie aus der Perspektive des gesponnenen Garns heraus betrachtet, bereitgestellt ist.

**5.** Vorrichtung zur Herstellung eines schmelzgeblasenen Elektret-Vliesstoffs, umfassend:

einen Spinnabschnitt zum Spinnen eines nichtelektroleitfähigen Polymers, wobei der Abschnitt eine Vielzahl von Spinnlöchern in einer Breitenrichtung aufweist;
einen Wassersprühabschnitt zum Sprühen von Wasser auf das gesponnene Garn, das aus dem Spinnabschnitt austritt; und
einen Bogenbildungsabschnitt zum Aufnehmen des gesponnenen Garns,
wobei der Wassersprühabschnitt eine Sprühdüse ist, die eine Vielzahl von Wasserablassöffnungen, die in der Breitenrichtung angeordnet sind, und ein Paar von Luftablassöffnungen umfasst, die in der Breitenrichtung kontinuierlich oder unterbrochen geöffnet werden und angeordnet sind, um die Vielzahl von Wasserablassöffnungen sandwichartig zu umgeben und zu bewirken, dass Luft, die aus den Luftablassöffnungen abgelassen wird, mit Wasser, das aus der Vielzahl von Wasserablassöffnungen abgelassen wird, zur Kollision gebracht wird.

## Revendications

**1.** Procédé de production d'un tissu non-tissé obtenu par fusion-soufflage d'électret,

dans lequel, lorsqu'un polymère non électroconducteur est filé par fusion à partir d'une filière présentant une pluralité de trous de filage dans une direction de largeur et un fil filé est collecté par un dispositif de collecte de fil prévu en dessous pour former un tissu non tissé obtenu par fusion-soufflage, de l'eau est pulvérisée par une buse de pulvérisation sur le fil filé entre la filière et le dispositif de collecte de fil pour conférer des propriété d'électret au tissu non tissé obtenu par fusion-soufflage,
la buse de pulvérisation inclut une pluralité d'ouvertures d'évacuation d'eau agencées dans la direction de largeur et une paire d'ouvertures d'évacuation d'air qui sont ouvertes de manière continue ou intermittente dans la direction de largeur et sont agencées pour se faire face de manière à enserrer la pluralité d'ouvertures d'évacuation d'eau, et
l'air évacué par les ouvertures d'évacuation d'air est amené à entrer en collision avec l'eau évacuée à partir de la pluralité d'ouvertures d'évacuation d'eau pour pulvériser l'eau sur le fil filé.

2. Procédé de production d'un tissu non tissé obtenu par fusion-soufflage d'électret selon la revendication 1, dans lequel un pourcentage eau/polymère [%] représenté par la formule est de 300 % ou plus et inférieur à 500 % :

$$\text{formule : } (Wp/Wf) \times 100$$

(dans laquelle Wp représente une masse d'évacuation d'eau de la buse de pulvérisation dans un temps unitaire par largeur unitaire, et Wf représente une masse d'évacuation du polymère non électroconducteur dans un temps unitaire par largeur unitaire) .

3. Procédé de production d'un tissu non tissé obtenu par fusion-soufflage d'électret selon la revendication 1 ou 2, dans lequel une distance horizontale de la buse de pulvérisation par rapport au fil filé est de 50 mm ou plus et de 150 mm ou moins.

4. Procédé de production d'un tissu non tissé obtenu par fusion-soufflage d'électret selon la revendication 1 ou 2, dans lequel la buse de pulvérisation est fournie uniquement sur un côté de direction de transport du tissu non tissé obtenu par fusion-soufflage d'électret collecté par le dispositif de collecte de fil tel que vu à partir du fil filé.

5. Appareil pour fabriquer un tissu non tissé obtenu par fusion-soufflage d'électret, comprenant :

une section de filage permettant de filer un polymère non électroconducteur, la section présentant une pluralité de trous de filage dans une direction de largeur ;
une section de pulvérisation d'eau permettant de pulvériser de l'eau sur le fil filé évacué à partir de la section de filage ; et
une section de production de feuilles permettant de collecter le fil filé,
dans lequel la section de pulvérisation d'eau est une buse de pulvérisation comprenant une pluralité d'ouvertures d'évacuation d'eau agencées dans la direction de largeur et une paire d'ouvertures d'évacuation d'air qui sont ouvertes de manière continue ou intermittente dans la direction de largeur et sont agencées pour enserrer la pluralité d'ouvertures d'évacuation d'eau, et amener l'air évacué par les ouvertures d'évacuation d'air à entrer en collision avec l'eau évacuée par la pluralité d'ouvertures d'évacuation d'eau.

【Fig.1】

D
1
L
1a
W
4
4a
2
S
F
5
6b
3
3
6a
6

【Fig.2】

15a
4
17a
16
33a
4a
31
33b
18
17b
15b

【Fig.3】

(a)

P
4
33a
31
33b

(b)

4
33a
31
33b

【Fig.4】

11
14a
13a
12
13b
14b
4
15a
17a
16
18
17b
15b

200
100
600
800
700
M
400
500
300

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002166114 A
- JP 3476804 B
- WO 2003060216 A
- JP 2002161467 A
- KR 102256160 B1
- KR 20160141384 A
- US 2011168024 A1
- US 2013288555 A1
- US 3959421 A